# EUROPÄISCHE PATENTSCHRIFT

(11) **EP 3 255 461 B1**
(45) Veröffentlichungstag und Bekanntmachung des Hinweises auf die Patenterteilung: **14.10.2020**
(21) Anmeldenummer: 17180952.8
(22) Anmeldetag: 13.04.2010
(51) Int. Cl.: G01T 1/17, G01F 23/288, G01N 23/06

(54) **DIAGNOSE VON RADIOMETRISCHEN DETEKTOREN**
DIAGNOSIS OF RADIOMETRIC DETECTORS
DIAGNOSTIC DE DÉTECTEURS RADIOMÉTRIQUES

(43) Veröffentlichungstag der Anmeldung: 13.12.2017
(62) Teilanmeldung aus: 10159755.7
(73) Patentinhaber: VEGA Grieshaber KG, 77709 Wolfach (DE)
(72) Erfinder: RAUER, Winfried, 77716 Fischerbach (DE); FEHRENBACH, Josef, 77716 Haslach (DE); KÖRNLE, Ralf, 77736 Zell a. H. (DE)
(74) Vertreter: Maiwald Patent- und Rechtsanwaltsgesellschaft mbH

(56) Entgegenhaltungen:
- DE-A1- 10 048 559
- DE-A1- 19 711 124
- DE-C1- 4 114 030

## Beschreibung

### Gebiet der Erfindung

Die Erfindung betrifft die radiometrische Füllstandmessung, die radiometrische Dichtemessung und die radiometrische Durchsatzmessung. Insbesondere betrifft die Erfindung eine Diagnoseeinrichtung für einen radiometrischen Detektor, insbesondere für einen radiometrischen Füllstanddetektor, einen radiometrischen Dichtedetektor und/oder einen radiometrischen Durchsatzdetektor. Weiterhin betrifft die Erfindung ein radiometrisches Füllstandmessgerät mit einer Diagnoseeinrichtung, ein radiometrisches Dichtemessgerät mit einer Diagnoseeinrichtung und ein radiometrisches Durchsatzmessgerät mit einer Diagnoseeinrichtung, sowie ein Verfahren zur Diagnose von einem radiometrischen Detektor.

### Technologischer Hintergrund

Radiometrische Messgeräte verwenden einen Komparator, um Pulse zu zählen. Verstärkungsänderungen, wie sie durch Temperaturdriften hervorgerufen werden können, führen oft zu Änderungen in der Häufigkeitsverteilung der gemessenen Pulse. Hierdurch kann sich eine Verfälschung der Messergebnisse ergeben.

DE 100 48 559 A1 beschreibt eine Vorrichtung zur Bestimmung und Überwachung der Dichte und des Füllstands eines Mediums in einem Behälter mittels eines radiometrischen Messverfahrens. Es ist eine Analyseeinheit vorgesehen, die in zumindest einem Teilbereich des Energiespektrums der von der Empfangseinheit detektierten Strahlung ermittelt. Es ist darüber hinaus eine Regel-/Auswerteeinheit vorgesehen, die anhand zumindest eines charakteristischen Bereichs des Energiespektrums oder eines Teilbereichs des Energiespektrums eine Triftstabilisierung der radiometrischen Messvorrichtung vornimmt.

### Zusammenfassung der Erfindung

Es ist eine Aufgabe der Erfindung, die Genauigkeit der Messergebnisse von radiometrischen Detektoren zu verbessern.

Es sind eine Diagnoseeinrichtung für einen radiometrischen Detektor, insbesondere für ein Füllstandmessgerät, ein Dichtemessgerät und/oder ein Durchsatzmessgerät, ein radiometrisches Füllstandmessgerät mit einer solchen Diagnoseeinrichtung, ein radiometrisches Dichtemessgerät mit einer solchen Diagnoseeinrichtung, ein radiometrisches Durchsatzmessgerät mit einer solchen Diagnoseeinrichtung sowie ein Verfahren zur Diagnose von einem radiometrischen Detektor gemäß den Merkmalen der unabhängigen Ansprüche angegeben. Weiterbildungen der Erfindung ergeben sich aus den Unteransprüchen.

Die beschriebenen Ausführungsbeispiele betreffen gleichermaßen die Diagnoseeinrichtung sowie die kompletten Messgeräte und das Verfahren. In anderen Worten können Merkmale, die im Folgenden beispielsweise im Hinblick auf die Diagnoseeinrichtung beschrieben werden, auch in den Messgeräten und in dem Verfahren implementiert werden, und umgekehrt.

Gemäß einem ersten Aspekt der Erfindung ist eine Diagnoseeinrichtung für einen radiometrischen Detektor angegeben, welche eine Amplitudenmesseinheit und eine Vergleichseinheit aufweist. Die Amplitudenmesseinheit ist zur Gewinnung von Informationen hinsichtlich der Amplituden der von dem Detektor gemessenen Pulse ausgeführt, wobei die Vergleichseinheit zum Vergleich der so gewonnenen Informationen mit Referenzwerten ausgeführt ist.

Beispielsweise wird die Amplitude jedes einzelnen Pulses eines Szintillators gemessen. Dadurch ist eine Diagnose möglich, welche die folgenden Effekte erkennen kann:
- Erhöhte Rate von Dunkelpulsen des photoempfindlichen Bauteils (Photomultiplier, Photodiode oder dergleichen);
- EMV-Einstrahlungen;
- Temperaturdrift;
- Beschädigung des Szintillators.

Somit kann eine Kompensation eventueller Messfehler schneller, genauer und sicherer durchgeführt werden.

Gemäß einem weiteren Aspekt der Erfindung ist ein radiometrisches Füllstandmessgerät mit einem radiometrischen Detektor und einer oben und im Folgenden beschriebenen Diagnoseeinrichtung angegeben.

Gemäß einem weiteren Aspekt der Erfindung ist ein radiometrisches Dichtemessgerät mit einem radiometrischen Detektor und einer oben und im Folgenden beschriebenen Diagnoseeinrichtung angegeben.

Gemäß einem weiteren Aspekt der Erfindung ist ein radiometrisches Durchsatzmessgerät mit einer oben und im Folgenden beschriebenen Diagnoseeinrichtung sowie einem radiometrischen Detektor angegeben.

Gemäß einem weiteren Aspekt der Erfindung ist ein Verfahren zur Diagnose für einen radiometrischen Detektor angegeben, durch welches Messwertverfälschungen detektiert werden können. Bei dem Verfahren werden Informationen hinsichtlich der Amplituden der von dem Detektor gemessenen Pulse gewonnen. Aus diesen gewonnenen Informationen werden dann Rückschlüsse auf Messwertverfälschungen gezogen, indem die gewonnenen Informationen mit Referenzwerten, die beispielsweise werkseitig gespeichert worden sind, verglichen werden.

Es kann als ein Kernaspekt der Erfindung angesehen werden, dass die gemessenen Pulse hinsichtlich ihrer Amplituden analysiert werden. Die so gewonnene Amplitudenverteilung wird dann mit einer Referenzverteilung verglichen, wonach dann eine Fehlerdiagnose und ggf. eine Fehlerbehebung durchgeführt werden kann. Zur Fehlerbehebung kann beispielsweise eine automatische Verschiebung der Triggerschwelle im Messwertkanal oder eine automatische Neueichung des Messgeräts durchgeführt werden.

Im Folgenden werden mit Verweis auf die Figuren Ausführungsbeispiele der Erfindung beschrieben.

### Kurze Beschreibung der Figuren

Fig. 1A zeigt ein Messgerät gemäß einem Ausführungsbeispiel der Erfindung.
Fig. 1B zeigt mögliche von dem Messgerät gemessenen Pulse.
Fig. 2 zeigt eine Amplitudenverteilung eines Szintillators, beispielsweise eines organischen Kunststoffszintillators.
Fig. 3 zeigt eine Amplitudenverteilung eines Szintillators mit einer erhöhten Häufigkeit kleiner Pulsamplituden.
Fig. 4 zeigt eine Amplitudenverteilung eines Szintillators, die hin zu kleinen Pegeln verschoben ist.
Fig. 5 zeigt eine Amplitudenverteilung eines Szintillators, bei der die großen Pulsamplituden zugenommen haben.
Fig. 6 zeigt eine Amplitudenverteilung eines Szintillators, bei der die Häufigkeit der Pulsamplituden generell erhöht ist.
Fig. 7 zeigt eine Amplitudenverteilung eines Szintillators mit einem verbreiterten Photopeak.
Fig. 8 zeigt ein Flussdiagramm eines Verfahrens gemäß einem Ausführungsbeispiel der Erfindung.
Fig. 9 zeigt ein radiometrisches Messgerät gemäß einem Ausführungsbeispiel der Erfindung.

### Detaillierte Beschreibung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

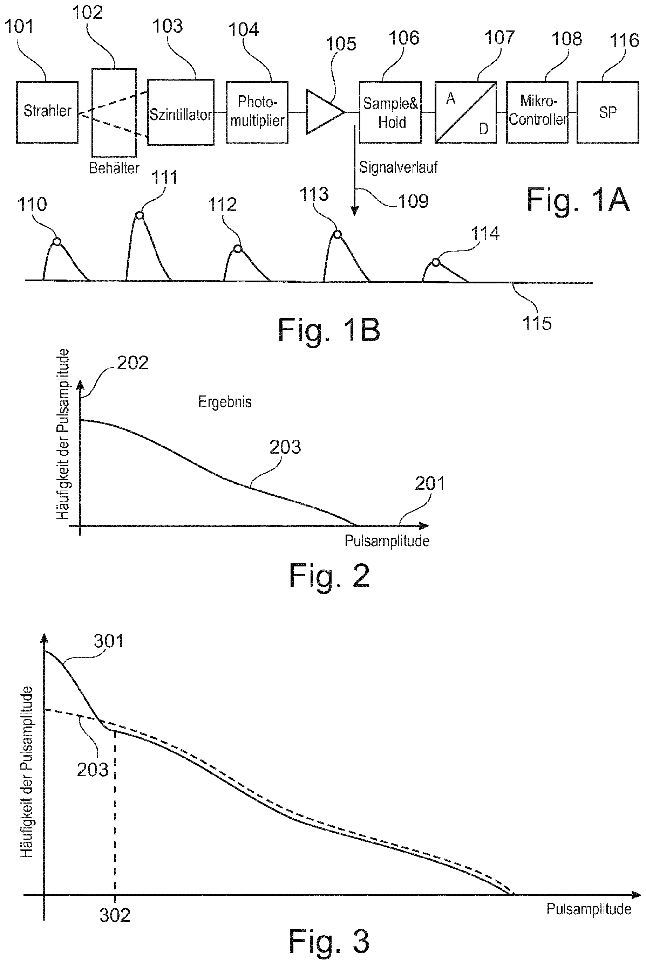

Fig. 1 zeigt ein radiometrisches Messgerät gemäß einem Ausführungsbeispiel der Erfindung. Das Messgerät, bei dem es sich beispielsweise um ein radiometrisches Füllstandmessgerät, ein radiometrisches Dichtemessgerät und/oder ein radiometrisches Durchsatzmessgerät handelt, weist einen radioaktiven Strahler 101 auf, der den Behälter 102, der beispielsweise mit einem Füllgut gefüllt ist, durchstrahlt. Hinter dem Behälter befindet sich der radiometrische Detektor, bei dem es sich um einen Szintillator 103 und einen daran angeschlossenen Photomultiplier 104 sowie einen Verstärker 105 handelt.

Der Szintillator 103 wandelt Gamma-Strahlung in Lichtpulse mit variabler Intensität um. Der Szintillationsvorgang kann durch den Comptoneffekt oder den Photoeffekt ausgelöst werden. Die Intensitätsverteilung der so entstehenden Lichtpulse ist durch das Szintillationsmaterial festgelegt und somit bekannt.

Nach dem Verstärker 105 kann der Signalverlauf der resultierenden Pulse abgegriffen und analysiert werden. Dies ist durch den Pfeil 109 symbolisiert. Im Messwertkanal befindet sich nach dem Verstärker 105 ein Sample & Hold Bauteil 106 zur Abtastung der Pulse.

Nach der Abtastung der Pulse durch das Sample & Hold Bauteil 106 erfolgt eine Analog/Digital Wandlung durch den Analog/Digital Wandler 107, der die resultierenden digitalen Signale einem Mikroprozessor 108 zuführt. Weiterhin kann eine Speichereinheit 116 vorgesehen sein, die beispielsweise an einen Mikroprozessor 108 angeschlossen ist.

Fig. 1B zeigt ein Beispiel für gemessene Pulse. Jeder der fünf Pulse weist eine Pulsamplitude 110, 111, 112, 113 bzw. 114 auf. Die Achse 115 symbolisiert den zeitlichen Verlauf.

Werden bei einem radiometrischen Messgerät zwei Komparatoren mit verschieden hohen Triggerschwellen eingesetzt, kann kontrolliert werden, ob große Pulse in erwarteter Zahl vorhanden sind. Dadurch sind zwei Punkte aus der Amplitudenverteilung der Pulse bekannt. Das erlaubt, Änderungen der Pulsamplituden zu erkennen und zu kompensieren, solange sie durch reine Verstärkungsänderungen (Temperaturdriften) hervorgerufen werden. Eine weitergehende Diagnose erfordert allerdings weitere Maßnahmen.

Fig. 2 zeigt eine typische Amplitudenverteilung eines organischen Kunststoffszintillators, bei dem vor allem der Comptoneffekt für die Szintillation verantwortlich ist. Die Achse 201 zeigt die Pulsamplitude und die Achse 202 die Häufigkeit der entsprechenden Pulsamplitude. Die Kurve 203 zeigt die Amplitudenverteilung.

Gemäß einem Ausführungsbeispiel der Erfindung kann die Diagnoseeinrichtung Informationen hinsichtlich den Amplituden der von dem Detektor gemessenen Pulse gewinnen, die dann mit werkseitig gespeicherten Referenzwerten verglichen werden.

Diese Referenzwerte entsprechen beispielsweise einer Referenzamplitudenverteilung.

Insbesondere ist es möglich, dass die gewonnenen Informationen den gemessenen Amplituden der von dem Detektor gemessenen Pulse entsprechen. Beispielsweise misst also die Diagnoseeinrichtung (bzw. das radiometrische Messgerät, welches die Diagnoseeinrichtung aufweist) die Amplitude jedes Pulses und speichert diese. Dadurch lässt sich die Amplitudenverteilung der Pulse schnell und einfach abbilden.

Insbesondere kann die Diagnoseeinrichtung ausgeführt sein, zu bestimmen, ob die Amplitude eines von dem Detektor gemessenen Pulses über einer voreingestellten Schwelle liegt. In einem einfachen Fall kann somit festgestellt werden, ob vermehrt kleine Pulsamplituden auftreten, wie dies in dem Fall der Fig. 3 gezeigt ist. Anstatt sämtliche Pulsamplituden auszuwerten, kann es in diesem Beispiel bereits ausreichen, eine Triggerschwelle an Punkt 302 zu setzen und die Pulse zu zählen, deren Pulsamplituden oberhalb der Triggerschwelle 302 liegen, und darüber hinaus diejenigen Pulse zu zählen, deren Amplituden unterhalb der Triggerschwelle 302 liegen. Die genaue Pulsamplitudenverteilung 301 muss in diesem Fall nicht gemessen werden.

Durch Vergleich der aktuellen Pulsverteilung 302 mit der beispielsweise ab Werk gespeicherten Pulsverteilung 203 ist es nun möglich, Diagnosen zu stellen. Im Übrigen ist es auch möglich, die Referenzverteilung 203 vor Ort benutzerseitig zu speichern, beispielsweise nachdem das Messgerät an seinem zugewiesenen Messort installiert wurde. Auch können verschiedene Referenzverteilungen 203 gespeichert sein, welche verschiedenen Messszenarien entsprechen. Der Benutzer kann die passende Referenzverteilung dann selber auswählen.

Eine starke Zunahme kleiner Pulsamplituden kann durch selbstgenerierte Pulse des Photomultipliers (PMT), die sog. Dunkelpulse, hervorgerufen werden. Auch elektrische Störungen, z. B. durch EMV-Einflüsse, können dies hervorrufen. Durch eine Erhöhung der Triggerschwelle des Messwertkanals können diese Pulse ausgeblendet werden. Die gemessene Zählrate verringert sich durch das Erhöhen der Triggerschwelle und damit der Messwert des Gerätes. Dies kann jedoch mit Hilfe der gespeicherten Pulsverteilung 203 kompensiert werden. Somit ist eine Messung mit eingeschränkter Genauigkeit nach wie vor möglich.

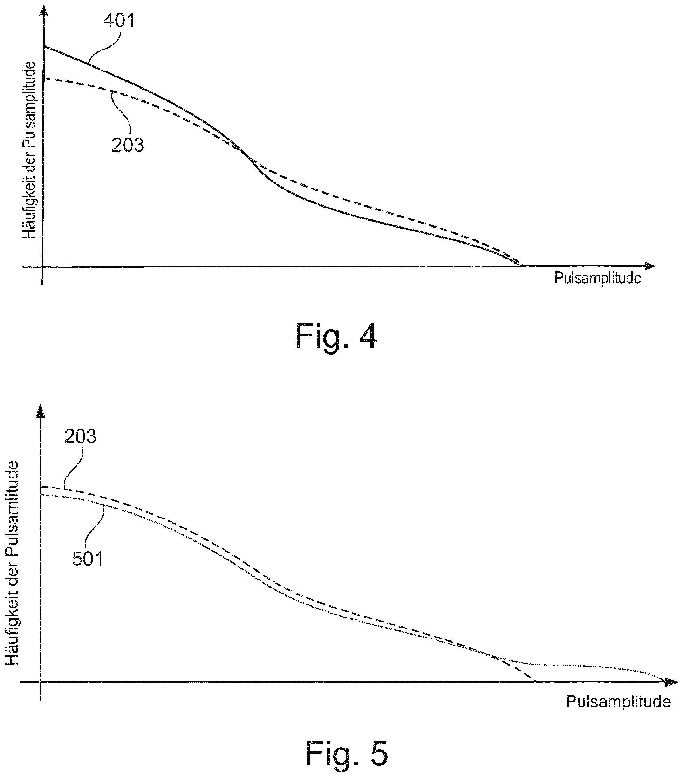

Eine generelle Verringerung der Pulsamplitude, also eine Verschiebung der Pulsamplitude hin zu kleinen Pegeln, kann durch die Alterung oder eine Beschädigung des Photomultipliers oder des Szintillators hervorgerufen werden. Eine solche Verschiebung ist in Fig. 4 gezeigt (siehe Amplitudenverteilung 401).

Da sowohl der PMT als auch viele Szintillatoren eine Temperaturabhängigkeit besitzen, kann eine generelle Verringerung der Pulsamplitude auch durch eine Veränderung der Umgebungstemperatur bewirkt werden.
Das Gerät kann dieser Verringerung der Pulsamplitude entgegenwirken, indem die Verstärkung des Verstärkers 105 erhöht wird, oder indem die Verstärkung des photoempfindlichen Bauteils, z.B. Photomultiplier 104 erhöht wird. Dies kann z.B. durch Erhöhung seiner Hochspannung geschehen. Weiterhin kann die Triggerschwelle reduziert werden, um die Verringerung der Pulsamplitude zu kompensieren. Ist die Verringerung der Pulsamplitude so stark, dass sie nicht mehr durch Umgebungsbedingungen verursacht sein kann, deutet dies auf eine Alterung oder Beschädigung von Photomultiplier oder Szintillator hin. Das Gerät kann daraufhin dies mit einer Fehlermeldung anzeigen.

Fig. 5 zeigt eine Pulsamplitudenverteilung 501, bei der die Häufigkeit großer Pulsamplituden im Vergleich zur Referenzverteilung 203 erhöht ist. Eine Zunahme großer Pulsamplituden kann durch eine Erhöhung der Hintergrundstrahlung entstehen, wenn die Hintergrundstrahlung energiereiche Gamma-Strahlung enthält. Dieser Effekt kann verringert werden, indem die großen Signalpegel nicht zur Messung verwendet werden bzw. indem die Anzahl der großen Pegel von der Gesamtzahl subtrahiert wird. In anderen Worten können die Pulse mit großen Pulsamplituden verworfen bzw. gelöscht werden.

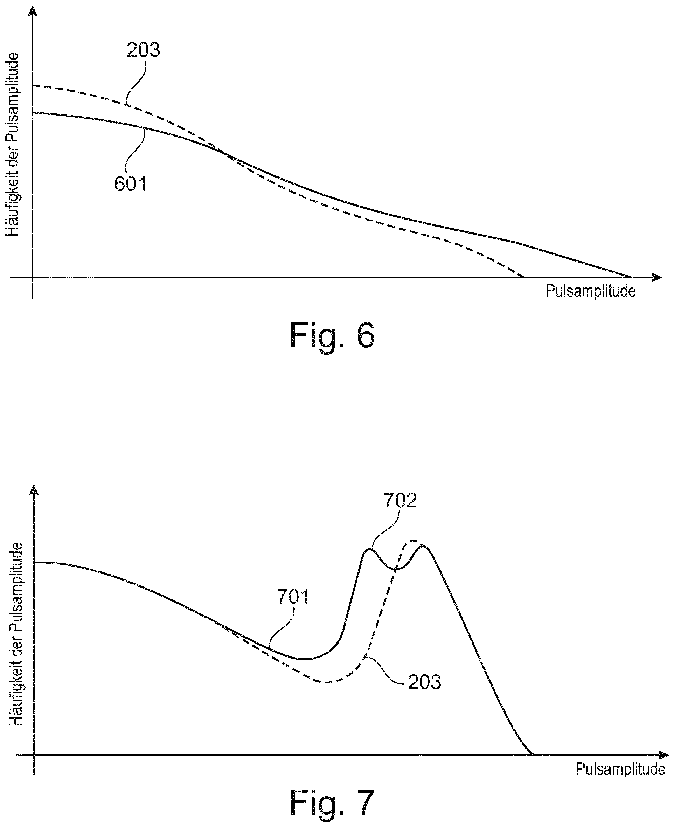

Fig. 6 zeigt eine Pulsamplitudenverteilung 601, bei der die Pulsamplituden generell erhöht sind. Eine generelle Erhöhung der Pulsamplitude kann in geringem Maße durch eine Veränderung der Umgebungstemperatur hervorgerufen werden, da der Photomultiplayer bzw. die Photodiode und viele Szintillatoren eine Temperaturabhängigkeit besitzen. Große Veränderungen deuten auf einen Defekt der Elektronik hin. Durch eine unkontrollierte Erhöhung der Spannungsversorgung für den Photomultiplier bzw. die Photodiode kann die Pulsamplitude generell größer werden. Das Gerät kann dieser Erhöhung der Pulsamplitude entgegenwirken, indem die Verstärkung des Verstärkers 105 verringert wird, oder indem die Verstärkung des photoempfindlichen Bauteils, z.B. Photomultiplier 104 verringert wird. Dies kann z.B. durch Verringerung seiner Hochspannung geschehen. Weiterhin kann die Triggerschwelle erhöht werden, um die Erhöhung der Pulsamplitude zu kompensieren. Ist die Erhöhung der Pulsamplitude so stark, dass sie nicht mehr durch Umgebungsbedingungen verursacht sein kann, deutet dies auf eine Beschädigung der Elektronik hin. Das Gerät kann daraufhin dies mit einer Fehlermeldung anzeigen.

Fig. 7 zeigt eine Pulsamplitudenverteilung 701, bei der der sog. Photopeak 702 im Vergleich zu der Referenzkurve 203 verbreitert ist. Viele anorganische Szintillatoren, die z. B. NaJ enthalten, produzieren mit verhältnismäßig großer Häufigkeit große Pulsamplituden. Dieser sog. Photopeak entsteht durch den Photoeffekt, bei dem Gammaquanten ihre komplette Energie an das Szintillatormaterial abgeben. Eine deutliche Verbreiterung des Photopeaks tritt auf, wenn der Szintillator beschädigt ist. Dies kann z. B. durch thermischen Schock geschehen, bei dem das Szintillatormaterial brechen kann.

Wird eine Verbreiterung des Photopeaks detektiert, kann beispielsweise nachgeeicht werden. Ist die Verbreiterung sehr stark deutet das auf einen Defekt des Szintillators hin. Das Gerät kann daraufhin dies mit einer Fehlermeldung anzeigen.

Es ist zu beachten, dass das Messgerät so ausgelegt sein kann, dass die Vermessung der Pulse und die folgende Auswertung der Pulsamplituden durch Vergleich mit den Referenzwerten in vorgebbaren zeitlichen Abständen erfolgt, beispielsweise wöchentlich oder täglich. Auch kann eine solche Diagnose durch bestimmte Ereignisse getriggert werden, beispielsweise durch eine starke Temperaturschwankung oder eine sonstige starke Änderung der Messumgebung.

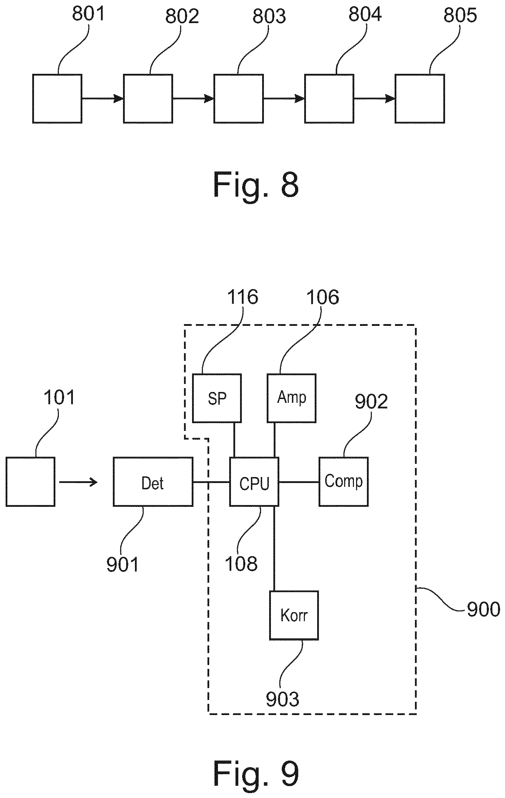

Fig. 8 zeigt ein Flussdiagramm eines Verfahrens gemäß einem Ausführungsbeispiel der Erfindung. In Schritt 801 werden Gammaquanten von der radioaktiven Quelle 101 in Richtung Behälter ausgestrahlt. In Schritt 802 treffen diese Gammaquanten auf einen Szintillator und werden in Lichtblitze umgewandelt, die von einem Photomultiplier in elektrische Pulse umgewandelt werden. In Schritt 803 werden die Amplituden dieser Pulse vermessen und in Schritt 804 mit einer Referenzpulsamplitudenverteilung verglichen. Dies erfolgt beispielsweise in einer Vergleichseinheit. In Schritt 805 kann eine Korrektur der Messdaten bzw. eine Neueichung des Messgeräts erfolgen. Hierfür ist eine Korrektureinheit vorgesehen.

Fig. 9 zeigt ein radiometrisches Messgerät mit einer Quelle 101, einem Detektor 901 sowie eine Diagnoseeinrichtung 900. Die Diagnoseeinrichtung 900 weist eine Recheneinheit 108 auf. An die Steuereinheit 108 ist eine Speichereinheit 116 angeschlossen, auf welcher die gemessenen Amplituden sowie die Referenzverteilung gespeichert sind. Weiterhin ist eine Amplitudenmesseinheit 106, eine Vergleichseinheit 902 sowie eine Korrektureinheit 903 vorgesehen, welche ebenfalls an die Steuereinheit 108 angeschlossen sind.

Die Vergleichseinheit 902 dient dem Erzeugen von Diagnosedaten auf Basis des von der Vergleichseinheit vorgenommenen Vergleichs mit den Referenzwerten. Mit Hilfe der erzeugten Diagnosedaten ist es möglich, dass die Korrektureinheit 903 die Messergebnisse des Detektors 901 verbessert, beispielsweise indem eine Triggerschwelle des Messwertkanals des Detektors erhöht wird. Auch ist es möglich, dass Pulse mit einer Signalamplitude, die über einem voreingestellten Schwellwert liegt, verworfen oder subtrahiert werden. Ebenso ist es möglich, dass eine Neueichung des Detektors auf Basis des Vergleichs durchgeführt wird.

Der radiometrische Sensor 901, 900 kann zum Detektieren der radioaktiven Strahlung einen Szintillator verwenden, mit anschließendem Photomultiplier oder einer Photodiode. Mit Hilfe der Diagnoseeinrichtung 900 sind auch Diagnosen an Geiger-Müller-Zählrohren möglich.

Es ist zu beachten, dass die unterschiedlichen Bauteile (die Steuerung 108, die Amplitudenmesseinheit 106, die Vergleichseinheit 902 und/oder die Korrektureinheit 903) auch in einem Modul (beispielsweise der CPU 108) zusammengefasst sein können.

Ergänzend sei daraufhingewiesen, dass "umfassend" und "aufweisend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Diagnoseeinrichtung für einen radiometrischen Detektor, die Diagnoseeinrichtung aufweisend:
eine Amplitudenmesseinheit (106) zur Gewinnung von Informationen hinsichtlich Amplituden der von dem Detektor gemessenen Pulse;
eine Vergleichseinheit (108, 902) zum Vergleich der gewonnenen Informationen mit Referenzwerten;
wobei die Diagnoseeinrichtung ausgeführt ist, festzustellen ob vermehrt kleine Pulsamplituden auftreten, und in diesem Fall eine Triggerschwelle eines Messwertkanals zu erhöhen, um die Zählrate zu verringern; oder
festzustellen ob die Häufigkeit großer Pulsamplituden erhöht ist, und in diesem Fall Pulse mit großen Pulsamplituden nicht zur Messung zu verwenden; oder
festzustellen ob der Photopeak (702) der Amplitudenverteilung verbreitert ist, und in diesem Fall nachzueichen.

2. Diagnoseeinrichtung nach Anspruch 1,
wobei die Referenzwerte einer Referenzamplitudenverteilung entsprechen.

3. Diagnoseeinrichtung nach einem der vorhergehenden Ansprüche,
wobei die gewonnenen Informationen einer gemessenen Amplitude der von dem Detektor gemessenen Pulse entsprechen.

4. Diagnoseeinrichtung nach einem der vorhergehenden Ansprüche,
wobei die Amplitudenmesseinheit (106) zur Bestimmung der Amplitude jedes von dem Detektor gemessenen Pulses ausgeführt ist.

5. Diagnoseeinrichtung nach einem der vorhergehenden Ansprüche,
wobei die Amplitudenmesseinheit (106) zur Bestimmung, ob die Amplitude eines von dem Detektor gemessenen Pulses über einer voreingestellten Schwelle liegt, ausgeführt ist.

6. Diagnoseeinrichtung nach einem der vorhergehenden Ansprüche, weiterhin aufweisend:
eine Speichereinheit (116) zur Speicherung der Referenzwerte.

7. Diagnoseeinrichtung nach einem der vorhergehenden Ansprüche, wobei die Diagnoseeinrichtung weiter ausgeführt ist, festzustellen ob sich die Pulsamplituden verringern, und in diesem Fall eine Verstärkung eines Verstärkers (105) oder eines photoempfindlichen Bauteils (104) zu erhöhen oder die Triggerschwelle zu reduzieren, um die Verringerung der Pulsamplituden zu kompensieren; oder festzustellen ob sich die Pulsamplituden erhöhen, und in diesem Fall eine Verstärkung eines Verstärkers (105) oder eines photoempfindlichen Bauteils (104) zu verringern oder die Triggerschwelle zu erhöhen, um die Erhöhung der Pulsamplituden zu kompensieren

8. Radiometrisches Füllstandmessgerät, aufweisend:
einen radiometrischen Detektor (103, 104);
eine Diagnoseeinrichtung (900) nach einem der Ansprüche 1 bis 7.

9. Radiometrisches Dichtemessgerät, aufweisend:
einen radiometrischen Detektor (103, 104);
eine Diagnoseeinrichtung (900) nach einem der Ansprüche 1 bis 7.

10. Radiometrisches Durchsatzmessgerät, aufweisend:
einen radiometrischen Detektor (103, 104);
eine Diagnoseeinrichtung (900) nach einem der Ansprüche 1 bis 7.

11. Verfahren zur Diagnose von einem radiometrischen Detektor, das Verfahren aufweisend die Schritte:
Gewinnen von Informationen hinsichtlich Amplituden der von dem Detektor gemessenen Pulse;
Vergleichen der gewonnenen Informationen mit Referenzwerten;
Feststellen, ob vermehrt kleine Pulsamplituden auftreten, und in diesem Fall eine Triggerschwelle eines Messwertkanals zu erhöhen, um die Zählrate zu verringern; oder
Feststellen, ob die Häufigkeit großer Pulsamplituden erhöht ist, und in diesem Fall Pulse mit großen Pulsamplituden nicht zur Messung zu verwenden; oder
Feststellen, ob der Photopeak (702) der Amplitudenverteilung verbreitert ist, und in diesem Fall den Detektor neu zu eichen.

12. Verfahren nach Anspruch 11, weiter aufweisend die Schritte:
Erzeugen von Diagnosedaten auf Basis des von einer Vergleichseinheit (108) vorgenommenen Vergleichs; und
Verbesserung eines Messergebnisses des Detektors auf Basis der Diagnosedaten.

13. Verfahren nach Anspruch 11 oder 12, weiter aufweisend die Schritte:
Feststellen, ob sich die Pulsamplituden verringern, und in diesem Fall eine Verstärkung eines Verstärkers (105) oder eines photoempfindlichen Bauteils (104) zu erhöhen oder die Triggerschwelle zu reduzieren, um die Verringerung der Pulsamplituden zu kompensieren; oder
Feststellen, ob sich die Pulsamplituden erhöhen, und in diesem Fall eine Verstärkung eines Verstärkers (105) oder eines photoempfindlichen Bauteils (104) zu verringern oder die Triggerschwelle zu erhöhen, um die Erhöhung der Pulsamplituden zu kompensieren

## Claims

1. A diagnostic device for a radiometric detector, the diagnostic device comprising:
an amplitude measuring unit (106) for obtaining information relating to amplitudes of the pulses measured by the detector;
a comparator unit (108, 902) for comparing the obtained information with reference values;
wherein the diagnostic device is configured to determine whether small pulse amplitudes occur increasingly, and in that case to increase a trigger threshold of a measurement value channel in order to reduce the counting rate;
or to determine whether the frequency of large pulse amplitudes is increased, and in that case not to use pulses with large pulse amplitudes for measurement;
or to determine whether the photopeak (702) of the amplitude distribution is widened, and in that case to further calibrate.

2. The diagnostic device according to claim 1,
wherein the reference values correspond to a reference amplitude distribution.

3. The diagnostic device according to one of the preceding claims,
wherein the information obtained corresponds to a measured amplitude of the pulses measured by the detector.

4. The diagnostic device according to one of the preceding claims,
wherein the amplitude measuring unit (106) is configured to determine the amplitude of each pulse measured by the detector.

5. The diagnostic device according to one of the preceding claims,
wherein the amplitude measuring unit (106) is configured to determine whether the amplitude of a pulse measured by the detector is above a preset threshold.

6. The diagnostic device according to one of the preceding claims, further comprising:
a storage unit (116) for storing the reference values.

7. The diagnostic device according to one of the preceding claims, wherein the diagnostic device is further configured
to determine whether the pulse amplitudes decrease, and in that case to increase a gain of an amplifier (105) or a photosensitive component (104) or to reduce the trigger threshold to compensate for the decrease in pulse amplitudes;
or to determine whether the pulse amplitudes increase, and in that case, to reduce a gain of an amplifier (105) or a photosensitive component (104) or to increase the trigger threshold to compensate for the increase in pulse amplitudes.

8. A radiometric fill-level measuring device, comprising:
a radiometric detector (103, 104);
a diagnostic device (900) according to one of claims 1 to 7.

9. A radiometric density measuring device, comprising:
a radiometric detector (103, 104);
a diagnostic device (900) according to one of claims 1 to 7.

10. A radiometric throughput measuring device, comprising:
a radiometric detector (103, 104);
a diagnostic device (900) according to one of claims 1 to 7.

11. A method for diagnosing a radiometric detector, the method comprising the steps of:
obtaining information relating to the amplitudes of the pulses measured by the detector;
comparing the obtained information to reference values;
determining whether small pulse amplitudes occur more frequently, and in that case increasing a trigger threshold of a measurement channel to reduce the teeth;
or determining whether the frequency of large pulse amplitudes is increased, and in that case not using pulses with large pulse amplitudes for measurement; or determining whether the photopeak (702) of the amplitude distribution is widened, and in that case recalibrating the detector.

12. The method according to claim 11, comprising:
generating diagnostic data on the basis of the comparison carried out by a comparator unit (108); and
correcting a measurement result of the detector on the basis of the diagnostic data.

13. The method according to claim 11 or 12, further comprising the steps:
determining whether the pulse amplitudes decrease, and in that case increasing a gain of an amplifier (105) or a photosensitive component (104) or reducing the trigger threshold to compensate for the decrease in pulse amplitudes; or
determining whether the pulse amplitudes increase, and in that case decreasing a gain of an amplifier (105) or a photosensitive component (104) or increasing the trigger threshold to compensate for the increase in pulse amplitudes.

## Revendications

1. Dispositif de diagnostic pour un détecteur radiométrique, le dispositif de diagnostic, présentant :
une unité de mesure d'amplitude (106) pour obtenir des informations sur les amplitudes des impulsions mesurées par le détecteur ;
une unité de comparaison (108, 902) pour comparer les informations obtenues avec des valeurs de référence ;
le dispositif de diagnostic étant conçu pour :
déterminer si de petites amplitudes d'impulsion se produisent plus fréquemment, et dans ce cas pour augmenter un seuil de déclenchement d'un canal de valeurs de mesure afin de diminuer le taux de comptage ; ou
déterminer si la fréquence de grandes amplitudes d'impulsion augmente, et dans ce cas pour ne pas utiliser d'impulsions de grande amplitude pour la mesure ; ou
déterminer si le pic photoélectrique (702) de la distribution d'amplitude est élargi, et dans ce cas pour réétalonner.

2. Dispositif de diagnostic selon la revendication 1,
dans lequel les valeurs de référence correspondent à une distribution d'amplitude de référence.

3. Dispositif de diagnostic selon l'une des revendications précédentes,
dans lequel les informations obtenues correspondent à une amplitude mesurée des impulsions mesurées par le détecteur.

4. Dispositif de diagnostic selon l'une des revendications précédentes,
dans lequel l'unité de mesure d'amplitude (106) est conçue pour déterminer l'amplitude de chaque impulsion mesurée par le détecteur.

5. Dispositif de diagnostic selon l'une des revendications précédentes,
dans lequel l'unité de mesure d'amplitude (106) est conçue pour déterminer si l'amplitude d'une impulsion mesurée par le détecteur est supérieure à un seuil préréglé.

6. Dispositif de diagnostic selon l'une des revendications précédentes, présentant en outre :
une unité de mémoire (116) pour stocker des valeurs de référence.

7. Dispositif de diagnostic selon l'une des revendications précédentes,
le dispositif de diagnostic étant en outre conçu pour :
déterminer si les amplitudes d'impulsion diminuent, et dans ce cas pour augmenter un gain d'un amplificateur (105) ou d'un composant photosensible (104) ou pour réduire le seuil de déclenchement afin de compenser la diminution des amplitudes d'impulsion ; ou
déterminer si les amplitudes d'impulsion augmentent, et dans ce cas pour diminuer un gain d'un amplificateur (105) ou d'un composant photosensible (104) ou pour augmenter le seuil de déclenchement afin de compenser l'augmentation des amplitudes d'impulsion.

8. Appareil de mesure de niveau radiométrique, présentant :
un détecteur radiométrique (103, 104) ;
un dispositif de diagnostic (900) selon l'une des revendications 1 à 7.

9. Appareil de mesure de densité radiométrique, présentant :
un détecteur radiométrique (103, 104) ;
un dispositif de diagnostic (900) selon l'une des revendications 1 à 7.

10. Appareil de mesure de débit radiométrique, présentant :
un détecteur radiométrique (103, 104) ;
un dispositif de diagnostic (900) selon l'une des revendications 1 à 7.

11. Procédé de diagnostic d'un détecteur radiométrique, le procédé présentant les étapes consistant à :
obtenir des informations sur les amplitudes des impulsions mesurées par le détecteur ;
comparer les informations obtenues avec des valeurs de référence ;
déterminer si de petites amplitudes d'impulsion se produisent plus fréquemment, et dans ce cas augmenter un seuil de déclenchement d'un canal de valeurs de mesure pour diminuer le taux de comptage ; ou
déterminer si la fréquence de grandes amplitudes d'impulsion augmente, et dans ce cas ne pas utiliser d'impulsions de grande amplitude pour la mesure ; ou
déterminer si le pic photoélectrique (702) de la distribution d'amplitude est élargi, et dans ce cas réétalonner le détecteur.

12. Procédé selon la revendication 11, présentant en outre les étapes consistant à :
générer des données de diagnostic sur la base de la comparaison effectuée par une unité de comparaison (108) ; et
améliorer un résultat de mesure du détecteur sur la base des données de diagnostic.

13. Procédé selon la revendication 11 ou 12, présentant en outre les étapes consistant à :
déterminer si les amplitudes d'impulsion diminuent, et dans ce cas augmenter un gain d'un amplificateur (105) ou d'un composant photosensible (104) ou réduire le seuil de déclenchement afin de compenser la diminution des amplitudes d'impulsion ; ou
déterminer si les amplitudes d'impulsion augmentent, et dans ce cas diminuer un gain d'un amplificateur (105) ou d'un composant photosensible (104) ou augmenter le seuil de déclenchement afin de compenser l'augmentation des amplitudes d'impulsion.
